# EUROPÄISCHE PATENTSCHRIFT

(11) **EP 1 275 285 B1**
(45) Veröffentlichungstag und Bekanntmachung des Hinweises auf die Patenterteilung: **13.09.2006**
(21) Anmeldenummer: 02014773.2
(22) Anmeldetag: 04.07.2002
(51) Int. Cl.: A01D 34/66

(54) **Mähwerk und Fahrzeug zur Rasen-, Garten- und Grundstückspflege**
Cutting implement and vehicle for lawn, garden and yard care
Dispositif de coupe et véhicule pour l'entretien de gazon et jardin

(30) Priorität: 09.07.2001 US 902528
(43) Veröffentlichungstag der Anmeldung: 15.01.2003
(73) Patentinhaber: DEERE & COMPANY, Moline, Illinois 61265-8098 (US)
(72) Erfinder: Buss, Steven Henry, Horicon, WI 53032 (US); Smith, Todd Lynne, Beaver Dam, WI53916 (US)
(74) Vertreter: Magin, Ludwig Bernhard

(56) Entgegenhaltungen:
- DE-U- 29 512 057
- FR-A- 2 548 864
- GB-A- 2 347 838

## Beschreibung

Die Erfindung betrifft ein Mähwerk mit einer Oberseite und einer sich von dieser Oberseite nach unten erstreckenden Seitenwand, welche zumindest zwei Schneidkammern bestimmt, in denen jeweils wenigstens ein Messerbalken drehbar angeordnet ist, und einer Leiteinrichtung, welche sich zumindest von einer ersten Schneidkammer in eine zweite Schneidkammer erstreckt, und ein Fahrzeug zur Rasen-, Garten- und Grundstückspflege.

Schneideinrichtungen bzw. Mähwerke, welche üblicherweise an Fahrzeugen zur Rasen-, Garten- und Grundstückspflege eingesetzt werden, weisen meist eine Mehrzahl von Schneidkammern auf, deren Gehäuse durch eine Schürze oder Seitenwand gebildet wird, welche sich von einer Oberseite aus nach unten erstrecken. Diese Seitenwand ist vorgesehen, um zumindest einen wesentlichen Teil des geschnittenen Pflanzenwuchses wie auch aufgewirbelten Schmutz innerhalb des Gehäuses zu halten und somit an einem Austreten aus den Schneidkammern zu hindern.

Die DE-A1-34 19 358 zeigt ein Mähwerk mit mehreren Schneidkammern. An der Unterseite des Mähwerks sind in einem vorderen Bereich desselben in Übergangsbereichen zwischen den Schneidkammern Leitelemente vorgesehen, die ein Austreten des Schnittguts nach unten verhindern sollen. Diese Leitelemente sind als von dem Mähwerk horizontal nach innen abstehende Platten ausgebildet. Insbesondere bei feuchten Umgebungsbedingungen kann es auf den Leitelementen zu Ansammlungen von Schnittgut kommen, welche zu einem Verstopfen des Mähwerks führen können.

Die gattungsgemäße DE-U1-295 12 057 zeigt ein Mähwerk mit zwei Schneidkammern, in denen jeweils ein Messerbalken angeordnet ist. Eine Leiteinrichtung erstreckt sich in einem vorderen Bereich des Mähwerks von der einen Schneidkammer über die zweite Schneidkammer bis zu einer Auswurföffnung, um die Förderung von geschnittenem Gras zu verbessern. Ein solches Mähwerk weist den Nachteil auf, dass das zu schneidende Gras nicht nur durch die Räder des das Mähwerk tragenden Fahrzeugs, sondern darüber hinaus durch einen vorderen Bereich der Seitenwand des Mähwerks und durch die Leiteinrichtung niedergedrückt wird, wodurch ein unsauberes Schnittbild aufgrund von sich nicht schnell genug wieder aufrichtetendem und daher nicht geschnittenen Gras hervorgerufen wird.

Das der Erfindung zugrunde liegende Problem wird darin gesehen, dass bekannte Mähwerke einen Teil des geschnittenen Mähgutes außerhalb ihrer Auswurföffnung auswerfen bzw. bekannte Leiteinrichtungen, die diesem Problem entgegenwirken sollen, sowie Fahrzeuge zur Rasen-, Garten- und Grundstückspflege, welche mit solchen Mähwerken ausgestattet sind, ein ungleichmäßiges Schnittbild bewirken.

Dieses Problem wird erfindungsgemäß durch die Lehre der Patentansprüche 1 und 6 gelöst, wobei in den weiteren Patentansprüchen die Lösung in vorteilhafter Weise weiterentwickelnde Merkmale aufgeführt sind.

Auf diese Weise wird ein Mähwerk zur Verfügung gestellt, das einem Auswerfen von Mähgut außerhalb seiner Auswurföffnung entgegenwirkt und dabei eine gute Schnittqualität liefert. Hierzu weist das Mähwerk eine Leiteinrichtung auf, welche vorzugsweise in der Art eines länglichen (Metall-)Streifens ausgebildet ist.

Während normalerweise ein großer Teil von Schmutz und Schnittgut, welches von den Messerbalken abgeworfen wird, auf die Innenseite der Seitenwände trifft, wird dieser Teil bei einem erfindungsgemäßen Mähwerk durch die Leiteinrichtung reduziert, wodurch einem Austreten von Schmutz und Schnittgut entgegengewirkt wird. Hierzu kann sich die Leiteinrichtung von der Oberseite des Mähwerks aus nach unten bis zu einem Punkt leicht oberhalb der Schnittebenen der Messerbalken erstrecken. Durch eine solche Anordnung wird Gras bzw. Pflanzenwuchs, welches/r durch die Messerbalken abgetrennt wird, zumindest im Wesentlichen an einem Verlassen der Schneidkammern gehindert.

Die Leiteinrichtung erstreckt sich von einer Schneidkammer zumindest bis in die nächste Schneidkammer. Es wird ein Bereich erzeugt, in dem keine oder nur geringe Turbulenzen auftreten, so dass Gras oder Vegetation, welche durch die vordere Kante der Seitenwand niedergedrückt wurde, sich wieder aufrichten kann, um durch einen entsprechenden Messerbalken geschnitten zu werden. Außerdem verbessert die Leiteinrichtung den Schnittgutfluss und die Luftbewegung von einer Schneidkammer in die nächste. Durch die in der Leiteinrichtung vorgesehene Aussparung wird das Gras in diesem Bereich zusätzlich gegen ein Niederdrücken geschützt, ohne auf die zuvor beschriebenen Wirkungen der Leiteinrichtung zu verzichten.

Ist die Leiteinrichtung zumindest bereichsweise von der vorderen Seitenwand beabstandet, so trifft das abgetrennte Schnittgut nach kurzer Zeit auf die Leiteinrichtung, so dass Verwirbelungen, die zu einem Austreten aus dem Mähwerk und zu einem Niederdrücken von noch nicht geschnittenem Bewuchs führen könnten, entgegengewirkt wird.

Vorzugsweise ist diese Aussparung derart ausgebildet, dass sie in Bereichen angeordnet ist bzw. Bereiche überspannt, welche durch ein Einwirken der vorderen Kante der Seitenwand oder durch Räder eines Trägerfahrzeugs etc. bereits zuvor niedergedrückt wurden und daher vor einem weiteren Niederdrücken geschützt werden sollen, um einen gleichmäßigen Schnitt zu ermöglichen.

Ein solches Mähwerk kann an Fahrzeugen zur Rasen-, Garten- und Grundstückspflege eingesetzt werden. Bei solchen Fahrzeugen handelt es sich beispielsweise um Rasentraktoren, Aufsitzmäher aber auch um handgeführte oder handgeschobene Geräte, wie Rasenmäher und Großflächenmäher.

In der Zeichnung ist ein nachfolgend näher beschriebenes Ausführungsbeispiel der Erfindung dargestellt. Es zeigt:
- Fig. 1: eine Seitenansicht eines Fahrzeugs zur Rasen-, Garten- und Grundstückspflege mit einem Mähwerk, welches in einem mittleren Bereich angeordnet ist,
- Fig. 2: eine perspektivische Darstellung des Mähwerks aus Fig. 1,
- Fig. 3: eine perspektivische Darstellung der Unterseite des Mähwerks mit einer Leiteinrichtung,
- Fig. 4: eine Seitenansicht der Unterseite des Mähwerks, die die Schnittebene der Messerbalken verdeutlicht,
- Fig. 5: eine perspektivische Darstellung der Unterseite des Mähwerks und
- Fig. 6: eine perspektivische Darstellung der Unterseite des Mähwerks mit Bezug zu den vorderen Rädern und Reifen des Fahrzeugs, an welchem das Mähwerk angebracht ist.

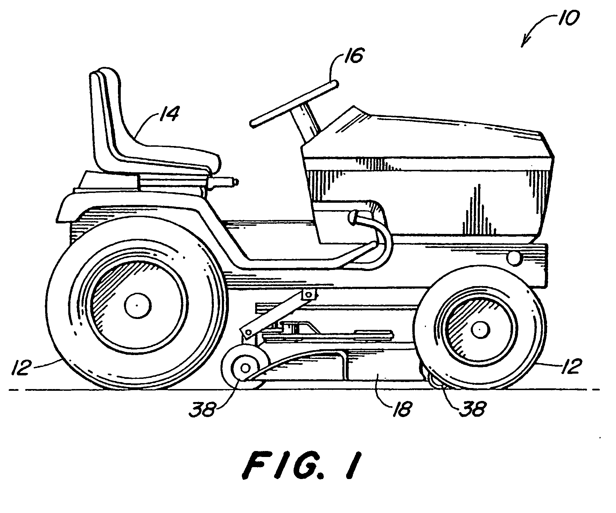

Mit Bezug auf Figur 1 wird ein Rasen- und Gartentraktor bzw. ein Fahrzeug 10 gezeigt, welches sich auf einer Mehrzahl von Am-Boden-angreifenden-Rädern 12 abstützt und einen Sitz 14 und ein Lenkrad 16 aufweist. Einen weiteren Bestandteil des Fahrzeugs 10 bildet ein Mähwerk 18 mit mehreren Schneidkammern, welches in der Mitte angeordnet ist.

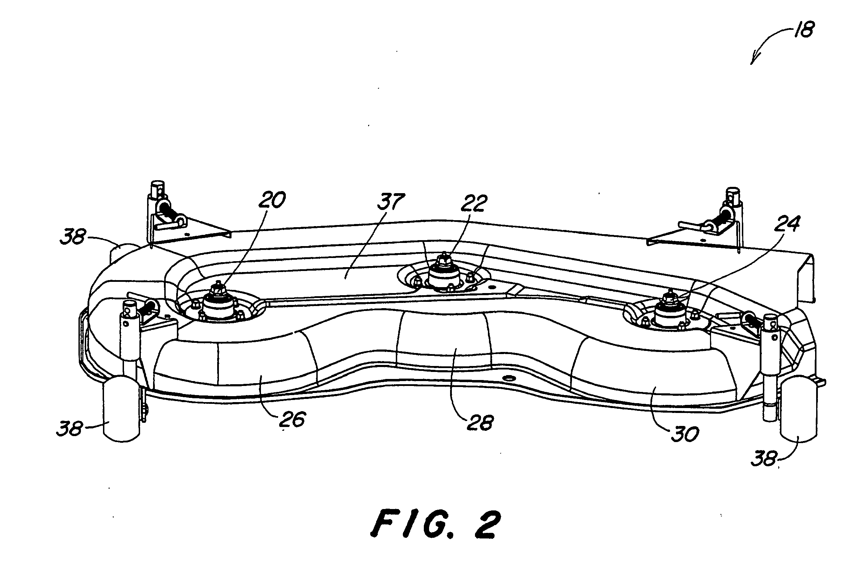

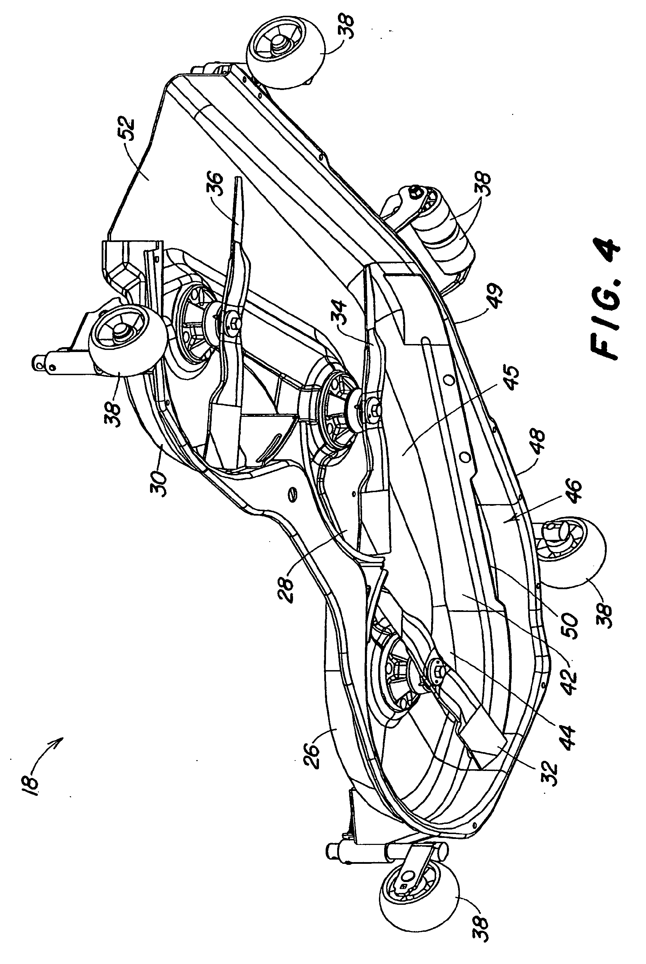

Figur 2 zeigt dieses Mähwerk 18 genauer, welches in Figur 10 als an dem Fahrzeug 10 angebracht dargestellt wird. Das Mähwerk 18 weist drei Schneidspindeln 20, 22 und 24 auf, welche in drei Schneidkammern 26, 28 und 30 entsprechend von links nach rechts angeordnet sind, welche jeweils ein Messer bzw. einen Messerbalken 32, 34, oder 36 darin unter einer Oberseite 37 des Mähwerks 18 beherbergen oder umschließen, wie dies in den Figuren 2 und 4 dargestellt wird. An einem vorderen Bereich und jedem der vier Eckbereiche des Mähwerks 18 sind ein Einschneiden-in-den-Untergrund-verhindernde Räder 38 an einer Schürze bzw. Seitenwand 39 angebracht, welche sich von der Oberseite weg erstreckt. Die Räder 38 werden verwendet, um das Mähwerk 18 über unerwartete Höhenunterschiede des Untergrundes, über den das Fahrzeug 10 fährt, zu leiten.

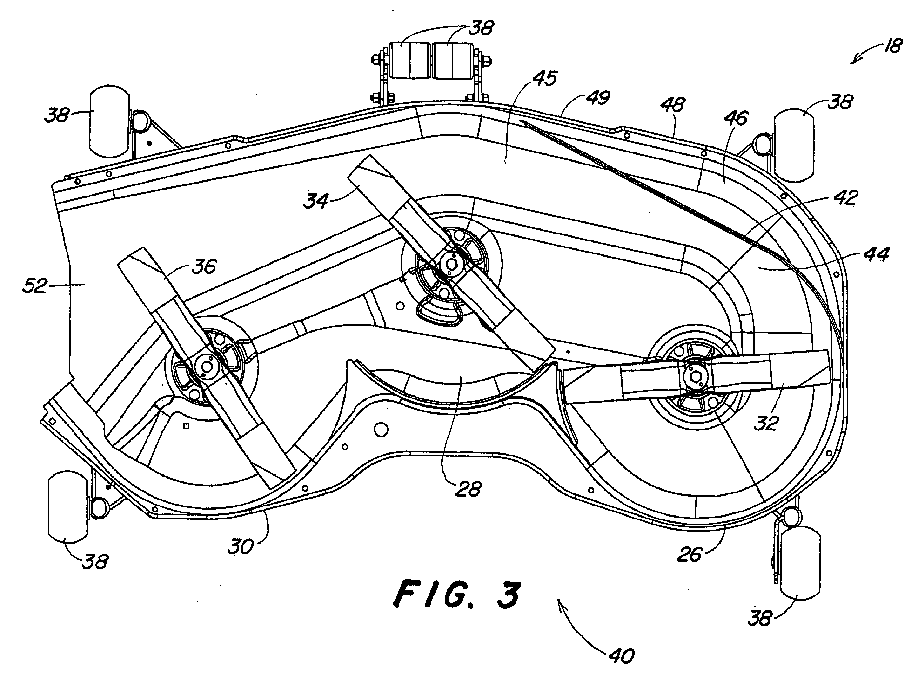

Betrachtet man nun die Figuren 3 - 5, wird das Mähwerk 18 so gezeigt, dass seine Unterseite 40 freigelegt wird. Dort ist eine Ablenkeinrichtung bzw. eine Leiteinrichtung 42 in Form eines länglichen Streifens angeordnet, welcher dazu beiträgt zu verhindern, dass Schmutz, wie geschnittene Pflanzen und auch Brocken und/oder Steine, die Unterseite 40 des Mähwerks 18 verlassen. Wie dies in Figur 4 gezeigt wird, erstreckt sich die Leiteinrichtung 42 von Oberseiten 44, 45 der Innenseite der linken und mittleren Schneidkammer 26, 28 entsprechend nach unten und bis zu einem Punkt, der leicht oberhalb der Schneidebene der Messerbalken 32, 34, 36 und etwas höher als der Frontbereich des Mähwerks 18 angeordnet ist. Pflanzen und Schmutz, welche der Leiteinrichtung 42 entkommen, werden bei einem Kontakt mit der Innenseite des Mähwerks 18 nach unten abgelenkt.

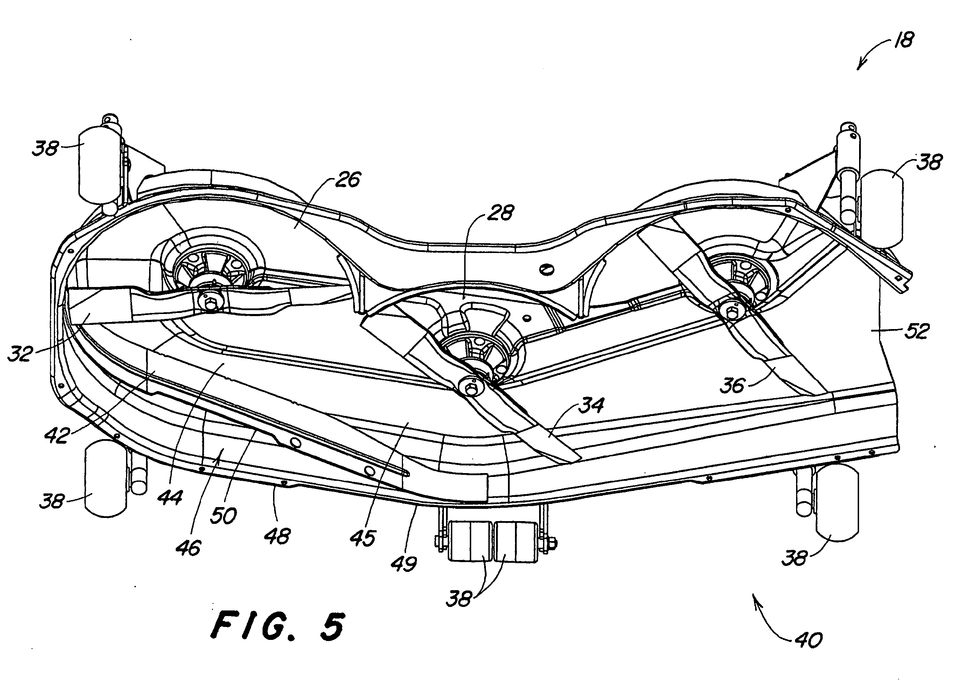

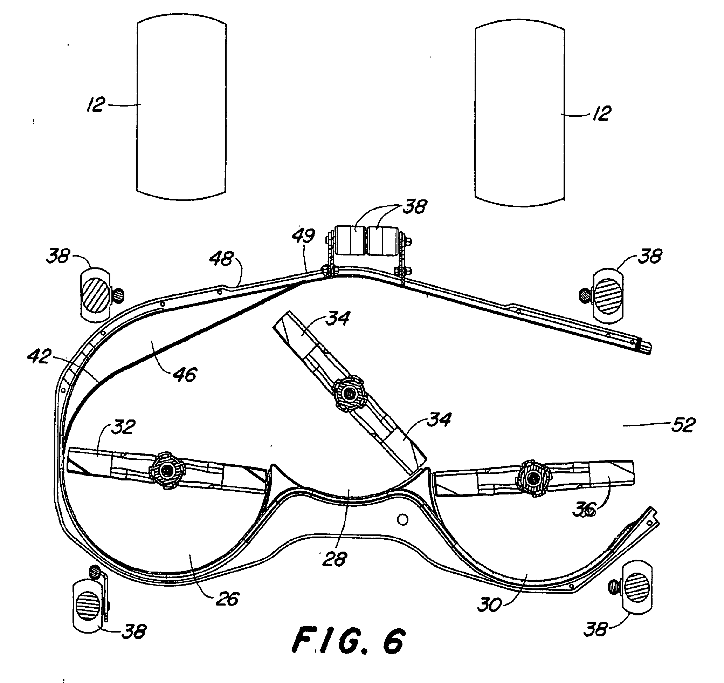

Darüber hinaus unterstützt die Anordnung der Leiteinrichtung 42 an der in den Figuren 5 und 6 gezeigten Stelle ein Schneiden von Gras und anderem Pflanzenwuchs, welches/r durch die entsprechenden Messerbalken 32, 34 der linken und mittleren Schneidkammer 26 und 28 ausgeübt wird. Das Schneiden des Pflanzenwuchses und dessen Wirksamkeit wird durch einen freien und unbehinderten Bereich bzw. einen Leerraum 46, der direkt vor der Leiteinrichtung 42 an den voreilenden Vorderkanten 48, 49 der linken und mittleren Schneidkammer 26 und 28 entsprechend erzeugt wird, unterstützt, wie dies am deutlichsten in Figur 5 dargestellt wird. Durch die Errichtung des Leerraums 46 wird Pflanzenwuchs, welcher durch die Vorderkanten der linken und mittleren Schneidkammer 26, 28 niedergedrückt wurde, die Möglichkeit gegeben, sich vor einem Zusammentreffen mit den Messerbalken 32, 34 wieder aufzurichten. Dies ist bedingt durch die Fähigkeit der Leiteinrichtung 42 den Leerraum 46 jenseits der Vorderkanten 48, 49 zu erzeugen, wodurch dem Gebiet erlaubt wird, im Wesentlichen frei von Luft- und Pflanzenbewegungen, welche durch eine Rotation des linken Messerbalkens 32 erzeugt werden, zu bleiben. Beim Durchschreiten dieses Leerraums 46, wird das Gras stärker begradigt, wobei nur sein oberster Abschnitt durch die Leiteinrichtung 42 berührt werden könnte, wobei die unteren und mittleren Bereiche des Grases in der Schneidebene, wo sie auf den linken Messerbalken treffen, im Wesentlichen aufrecht stehend belassen werden. Im Ergebnis sind die Messerbalken 32, 34 mehr als zuvor in der Lage den Pflanzenwuchs an- oder hochzuheben, so dass er eine Stellung oder Haltung einnehmen kann, welche den/die Messerbalken befähigt, ihn abzutrennen und auf diese Weise einen gewünschten Grad an Schnittqualität zu erzielen.

Wie dies in den Figuren 4 und 5 dargestellt wird, weist die Leiteinrichtung 42 auch eine Aussparung 50 auf. Diese Aussparung 50 stellt zusätzlichen vertikalen Raum zur Verfügung, wodurch Gras oder Pflanzenwuchs, welche(s) durch das linke vordere Rad 12 des Fahrzeugs 10 niedergedrückt wurde, zusätzlicher Raum und Zeit zur Verfügung gestellt wird, um sich aufzurichten. Durch die Fähigkeit der Begradigung, kann der Pflanzenwuchs durch die Messerbalken 32, 34 ausreichend angehoben werden. Nach dem Anheben und Schneiden wird der Pflanzenwuchs entlang der Leiteinrichtung 42 und durch die rechte Schneidkammer 30 zu einer Auswurföffnung 42 gefegt, wo er/sie das Mähwerk 18 verlässt.

Auf diese Weise wird eine Ablenkeinrichtung bzw. eine Leiteinrichtung 42 zur Verfügung gestellt, welche dazu beiträgt, Schmutz daran zu hindern, die Unterseite des Mähwerks 18 zu verlassen. Durch ein zur Verfügung stellen einer solchen Abschirmung hat eine Bedienungsperson eines Fahrzeugs 10, welches ein Anbaugerät der zuvor beschriebenen Art aufweist, die Möglichkeit ein sauberes Schnittbild ihres Rasens im Wesentlichen sicherzustellen und die allgemeine Schneidleistung, welche durch das Anbaugerät erreichbar ist, zu verbessern.

Durch die Beschreibung der bevorzugten Ausführungsform wird es deutlich werden, dass verschiedene Veränderungen durchgeführt werden können, ohne den Bereich der Erfindung, wie er durch die folgenden Ansprüche bestimmt wird, zu verändern.

## Patentansprüche

1. Mähwerk (18) mit einer Oberseite (37) und einer sich von dieser Oberseite (37) nach unten erstreckenden Seitenwand (39), welche zumindest zwei Schneidkammern (26, 28, 30) bestimmt, in denen jeweils wenigstens ein Messerbalken (32, 34, 36) drehbar angeordnet ist, und einer Leiteinrichtung (42), welches sich zumindest von einer ersten Schneidkammer (26, 28, 30) in eine zweite Schneidkammer (26, 28, 30) erstreckt, **dadurch gekennzeichnet, dass** die Leiteinrichtung (42) in ihrem der Oberseite (37) abgewandten Bereich eine sich im Wesentlichen horizontal erstreckende Aussparung (50) aufweist.

2. Mähwerk nach Anspruch 1, **dadurch gekennzeichnet, dass** die Aussparung (50) in einem zentralen Bereich der Leiteinrichtung (42) angeordnet ist.

3. Mähwerk nach Anspruch 1 oder 2, **dadurch gekennzeichnet, dass** die Leiteinrichtung (42) zumindest bereichsweise von einem vorderen Bereich der Seitenwand (39) des Mähwerks (18) beabstandet ist.

4. Mähwerk nach einem oder mehreren der vorherigen Ansprüche, **dadurch gekennzeichnet, dass** die Leiteinrichtung (42) bogenförmig ausgebildet ist.

5. Mähwerk nach einem oder mehreren der vorherigen Ansprüche, **dadurch gekennzeichnet, dass** die Aussparung (50) zumindest im Wesentlichen die Breite eines Fahrzeugrades aufweist.

6. Fahrzeug (10) zur Rasen-, Garten- und Grundstückspflege mit einem Mähwerk nach einem oder mehreren der vorherigen Ansprüche.

7. Fahrzeug nach Anspruch 6, **dadurch gekennzeichnet, dass** die Aussparung (50) zumindest im Wesentlichen hinter einem Rad (12, 14) des Fahrzeugs (10) angeordnet ist.

## Claims

1. Cutting implement (18) having an upper side (37) and a side wall (39) which extends downwards from this upper side (37) and defines at least two cutting chambers (26, 28, 30) in each of which at least one cutter bar (32, 34, 36) is rotatably arranged, said cutting implement also having a baffle (42) which extends at least from a first cutting chamber (26, 28, 30) into a second cutting chamber (26, 28, 30), **characterised in that** the baffle (42) has a recess (50) extending substantially horizontally in its region remote from the upper side (37).

2. Cutting implement according to claim 1, **characterised in that** the recess (50) is arranged in a central region of the baffle (42).

3. Cutting implement according to claim 1 or 2, **characterised in that** the baffle (42) is at least partially spaced apart from a front region of the side wall (39) of the cutting implement (18).

4. Cutting implement according to one or more of the preceding claims, **characterised in that** the baffle (42) is formed arcuate.

5. Cutting implement according to one or more of the preceding claims, **characterised in that** the recess (50) is at least substantially the width of a vehicle wheel.

6. Vehicle (10) for the care of a lawn, garden and grounds which has a cutting implement according to one or more of the preceding claims.

7. Vehicle according to claim 6, **characterised in that** the recess (50) is arranged at least substantially behind a wheel (12, 14) of the vehicle (10).

## Revendications

1. Mécanisme de coupe (18) comportant une face supérieure (37) et une paroi latérale (39), qui s'étend vers le bas à partir de ladite face supérieure (37) et qui délimite du moins deux chambres de coupe (26, 28, 30), dans chacune desquelles au moins une barre de coupe (32, 34, 36) est montée rotative, et un dispositif de guidage (42) qui s'étend au moins depuis une première chambre de coupe (26, 28, 30) dans une deuxième chambre de coupe (26, 28, 30), **caractérisé en ce que** le dispositif de guidage (42) comporte, dans sa partie écartée de la face supérieure (37), un évidement (50) qui s'étend sensiblement dans le sens horizontal.

2. Mécanisme de coupe selon la revendication 1, **caractérisé en ce que** l'évidement (50) est réalisé dans une zone centrale du dispositif de guidage (42).

3. Mécanisme de coupe selon la revendication 1 ou 2, **caractérisé en ce que** le dispositif de guidage (42) est écarté, au moins par zones, d'une zone avant de la paroi latérale (39) du mécanisme de coupe (18).

4. Mécanisme de coupe selon une ou plusieurs des revendications précédentes, **caractérisé en ce que** le dispositif de guidage (42) est courbe.

5. Mécanisme de coupe selon une ou plusieurs des revendications précédentes, **caractérisé en ce que** l'évidement (50) a au moins sensiblement la largeur d'une roue du véhicule.

6. Véhicule (10) pour l'entretien des pelouses, jardins et terrains, comportant un mécanisme de coupe selon une ou plusieurs des revendications précédentes.

7. Véhicule selon la revendication 6, **caractérisé en ce que** l'évidement (50) est agencé au moins sensiblement derrière une roue (12, 14) du véhicule (10).
